Europäisches Patentamt

European Patent Office

Office européen des brevets

(19)

(11) Publication number: **0 131 883**
A2

(12) # EUROPEAN PATENT APPLICATION

(21) Application number: **84108025.2**

(22) Date of filing: **09.07.84**

(51) Int. Cl.⁴: **B 05 D 1/34**
**B 05 C 5/02**

(30) Priority: **13.07.83 JP 127431/83**

(43) Date of publication of application:
**23.01.85 Bulletin 85/4**

(84) Designated Contracting States:
**BE CH DE FR GB IT LI NL SE**

(71) Applicant: **MITSUI POLYCHEMICALS CO., LTD.**
**2-5, Kasumigaseki 3-chome Chiyoda-ku**
**Tokyo(JP)**

(72) Inventor: **Ito, Hiroshi**
**1-7-4, Tsuganodai**
**Chiba-shi Chiba-ken(JP)**

(72) Inventor: **Tatsumi, Tetsujiro**
**6-19-3, Aobadai**
**Ichihara-shi Chiba-ken(JP)**

(72) Inventor: **Hirooka, Kooichi**
**5, Tamon-cho**
**Nara-shi Nara-ken(JP)**

(74) Representative: **Kraus, Walter, Dr. et al,**
**Patentanwälte Kraus & Weisert Irmgardstrasse 15**
**D-8000 München 71(DE)**

(54) **Method of applying multi-package reactive and curable liquid substance to substrate.**

(57) A method of applying a multiple-package reactive and curable liquid substance, which comprises applying a plurality of liquid substances together to a substrate, wherein the plurality of liquid substances are fed separately into a plurality of extrusion holes and extruded, and are associated almost simultaneously with the extrusion.

EP 0 131 883 A2

Croydon Printing Company Ltd

This invention relates to a method of simultaneously applying to a substrate a plurality of liquid substances which rapidly react and cure upon contact with each other. More specifically, this invention relates to a method of applying the components of a reactive hot-melt adhesive (for example, a polymer component and a curing agent component), which are melt-mixed at an elevated temperature to react and cure, to a substrate continuously or intermittently with ease and without any trouble.

A so-called two-package adhesive or coating composition composed of a plurality of liquid substances which when mixed, rapidly react and cure, for example a two-package polyurethan adhesive or a two-package epoxy adhesive, is composed basically of a polymer component containing a reactive functional group (to be referred to as a "base") and a catalyst component capable of catalyzing the crosslinking reaction of the polymer component or a crosslinking agent component capable of crosslinking the polymer (to be referred to as a "curing agent"). The two-package adhesive or coating composition is automatically applied to a substrate by a method which comprises separately feeding the base and the curing agent into an applicator having a mixing mechanism such as a screw or mixing blades and extrusion holes at its tip portion, extruding them while they are being mixed, applying the mixture to the substrate and curing it. If the two-package adhesive or coating composition has a low viscosity and a low speed of curing, it can be applied by this method without a trouble. On the other hand, a two-package adhesive or coating composition having a high speed of curing, such as a heat-setting two-package hot-melt adhesive, must be supplied after melting it under heat. If its speed of curing is very high, it starts to cure already in the step of mixing, and its viscosity rapidly increases to cause troubles such as blockage of the extrusion holes.

In particular, when the extrusion is effected intermittently or after suspension for a certain period of time, the heated mixture of the hot-melt adhesive base and the curing agent which stays in the mixing zone of the applicator and the path leading to the nozzle at its exit end rapidly reacts and cures during the period of cessation. Consequently, when the operation is resumed, the amount of the hot-melt adhesive extruded decreases markedly or its extrusion completely fails. For the foregoing reason, such a two package mixing type applicator has not gained commercial acceptance to date for use with hot-melt adhesives.

It is a primary object of this invention to provide a method by which a plurality of liquid substances which rapidly react and cure upon contact with each other, particularly the base component and the curing agent component of a hot-melt adhesive, can be applied to a substrate continuously or intermittently without the aforesaid troubles by using a relatively simple applicator and thus cured.

Another object of this invention is to provide the structure of an applicator which can be advantageously used in the practice of the aforesaid method.

Other objects and features of the present invention will become apparent from the following description.

According to this invention, there is provided a method of applying a multiple-package reactive and curable liquid substance, which comprises applying a plurality of liquid substances together to a substrate, wherein the plurality of liquid substances are fed separately into a plurality of extrusion holes and extruded, and are associated almost simultaneously with the extrusion.

The conventional applicator for a multi-plackage adhesive or coating composition is based on the concept that before extrusion the base component and the curing agent component are mixed, and then the mixture is extruded and applied to a substrate.  In contrast, the method of this invention is based on a different concept from this prior concept.  It has been found in accordance with this invention that when the base component and the curing agent component are separately and independently introduced into extrusion holes without mixing them till the time immediately before extrusion, and are associated almost simultaneously with extrusion, the curable composition composed of the base component and the curing agent component dispersed therein can be applied to the substrate and cured without the aforesaid disadvantage.

It should be understood that the expression "associated almost simultaneously with extrusion", as used herein, includes not only the case where the base component and the curing agent component are associated immediately after they are both extruded, but also the case where immediately before, simultaneously with, or immediately after the extrusion of one component, for example the base component, the other component, i.e. the curing agent component, is extruded into the flow of the base component and thereby the two components are associated.

The method of this invention will be described in more detail with reference to its preferred embodiments shown in the accompanying drawings.

Figure 1 is a sectional view showing one example of the extruding portion of an applicator used in the practice of the method of this invention.  The reference numeral 1 represents the entire extruding portion; 2, conduit for the base; 3, conduit for the curing agent; 4, an extrusion hole for the base; 5, an extrusion hole or orifice for the curing agent; 6, an opening of the extruding portion; and 7, valve for the extrusion of the base.

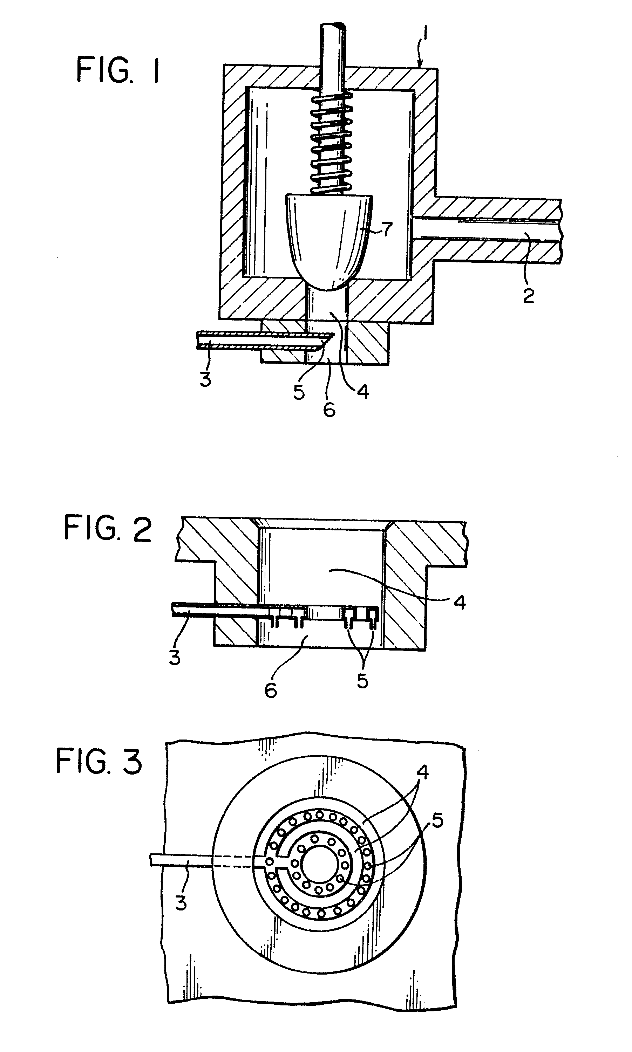

Figure 2 is a front sectional view showing one form of the opening 6 of the extruding portion 1 which can

be used in an applicator of the type shown in Figure 1.

Figure 3 is a top plan view of the opening 6 shown in Figure 2.

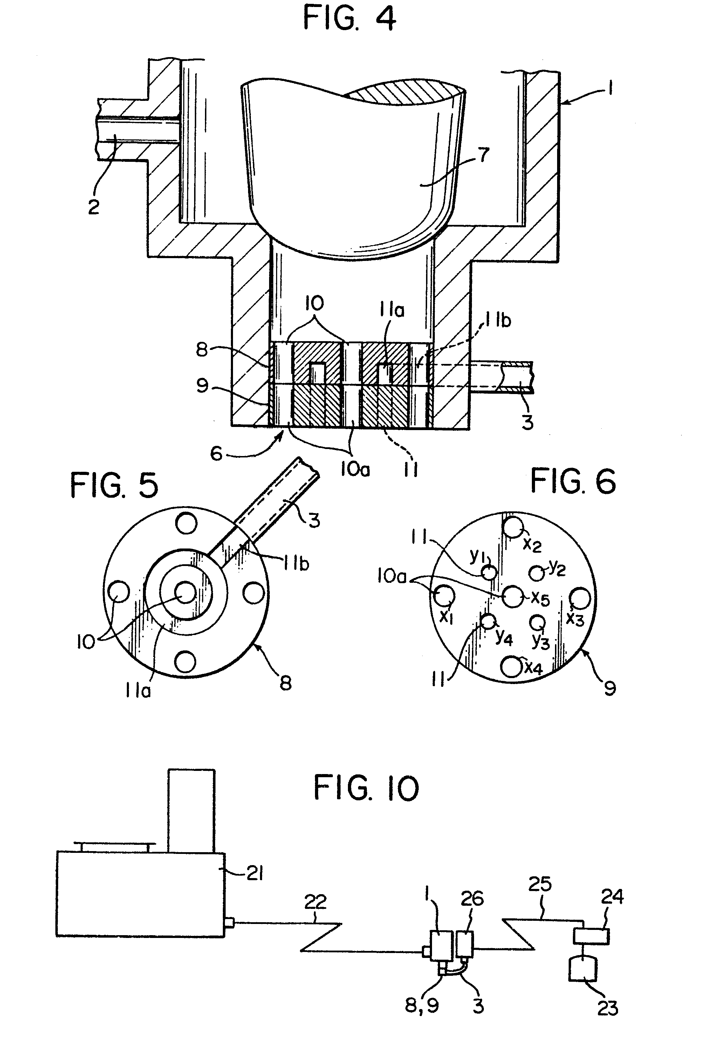

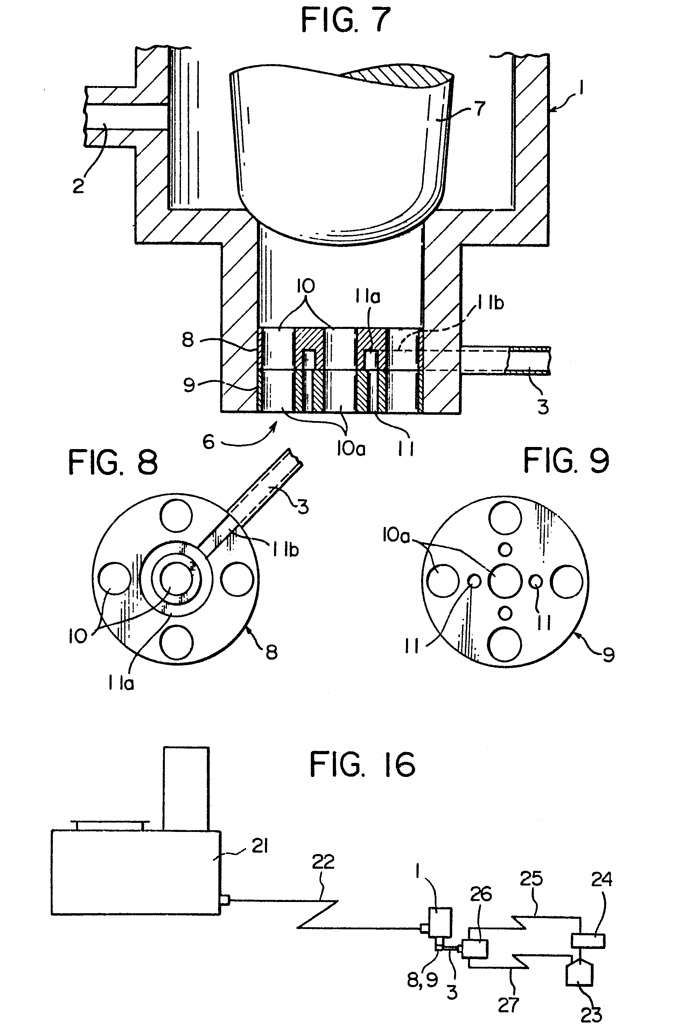

Figures 4 and 7 are sectional views showing another embodiment of the extruding portion of an applicator which can be used in the practice of the method of this invention.

Figures 5 and 8 are top plan views of top foraminous plates, and Figures 6 and 9 are top plan views of bottom foraminous plates. The reference numerals 8 and 9 represent foraminous plates; 10 and 10a, passage holes for the base; 11, a passage hole for the curing agent; and 11a and 11b, grooves on the foraminous plates 8.

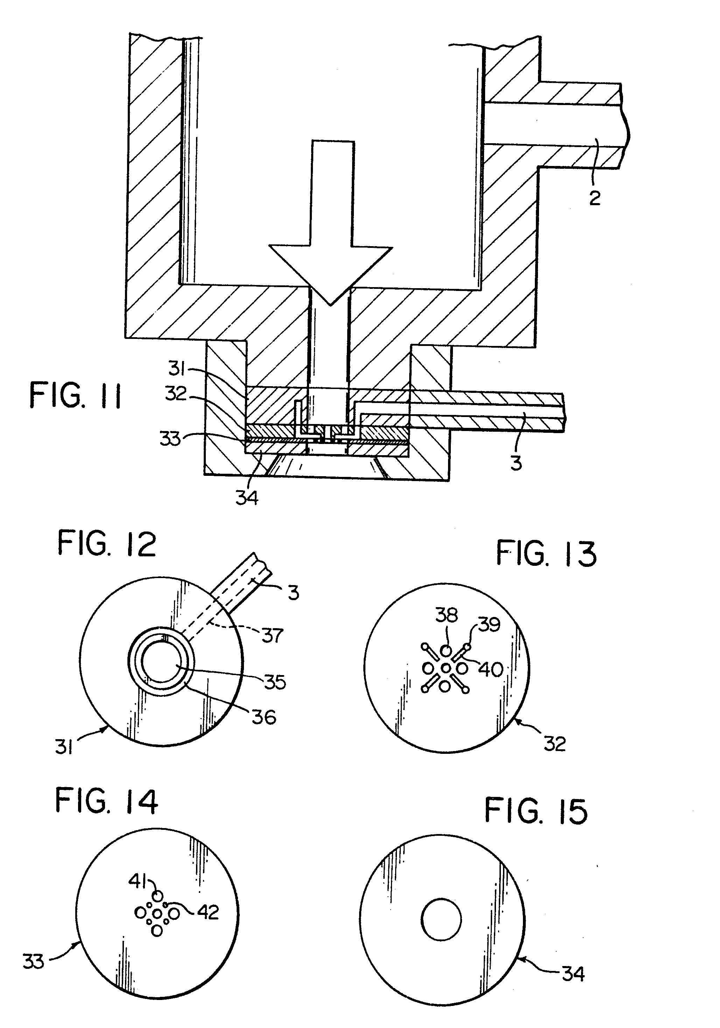

Figure 10 is a flow chart of the entire process in the practice of the method of this invention. The reference numeral 1 represents the main unit of the extruding portion; 3, a conduit for the curing agent; 8 and 9, foraminous plates; 21, a feed tank for the base; 22, a feed pipe for the base; 23, a feed tank for the curing agent; 24; a metering pump for the curing agent; 25, a feed pipe for the curing agent; and 20, a valve for feeding the curing agent.

Figures 11 to 15 show still another embodiment of the extruding portion of the applicator used in the practice of the method of this invention. The reference numerals 31, 32 and 33 represent foraminous plates.

Figure 16 is another flow chart of the entire process in the practice of the method of this invention. The reference numerals have the same meanings as in Figure 10, and the reference numeral 27 represents a return pipe for the curing agent.

Figure 1 is a sectional view of one example of the extruding portion (shown generally at 1) of an applicator used in the practice of the method of this invention. The extruding portion 1 is comprised of a conduit 2 for feeding the base leading to an extrusion hole 4 for the base and a conduit 3 for feeding of the curing agent leading to an extrusion hole 5 for the curing agent. The extrusion hole 5 for the curing agent extends into the inside of the extrusion hole 4 for the base and is opened near the opening 6 at the exit end of the extrusion hole 4. The base and the curing agent fed from separate feed sections (see Figure 10) are conducted to the extrusion holes 4 and 5 respectively through the conduits 2 and 3. The curing agent is extruded into the flow of the base almost simultaneously with the extrusion of the base, and they are applied together to a substrate (not shown). In the case of applying a hot-melt adhesive, the applicator is usually heated at an elevated temperature (usually at 130°C or higher) in order to maintain the liquid substances flowable. Accordingly, if the base and the curing agent are pre-mixed and introduced into an extrusion hole, they rapidly react and cure by the effect of the heat. Consequently, the mixture has an increased melt viscosity, and fluctuations in the amount of its extrusion occur. Furthermore, this finally leads to the trouble of blockage of the extrusion hole by the cured product. However, when the base and the curing agent are associated at the opening 6 of the extruding portion 1 through separate conduits and immediately co-extruded, the hot melt adhesive can be applied to the substrate without causing the aforesaid trouble while the curing agent is dispersed in the base to such an extent as is effective for the curing of the base.

When it is desired to extrude the base intermittently, a valve 7 may be provided between the extrusion hole 4 and the supply conduit 2 for the base so that the communication between the conduit 2 and the extrusion hole 4 can be shut off as desired.

The applicator used in the present invention is of the static mixing type as stated above, and is characterized by the fact that the base and the curing agent are sent under pressure in the liquid state to the extrusion holes and the applicator does not include any mechanical operating portion for mixing.

The applicator shown in Figure 1 has only one extrusion hole 5 for the curing agent. However, the dispersion of the curing agent in the base can be enhanced if there are two or more such extrusion holes. The number of extrusion holes for the curing agent can be selected according to the properties of the base and the curing agent, the ease of diffusion of the curing agent in the base, the required degree of dispersion, etc. Figures 2 and 3 show examples of the vicinity of the opening when a plurality of extrusion holes for the curing agent are provided. Preferably, as shown in Figure 3, the plurality of extrusion holes 5 are at suitable intervals on a circumference having the central axis of the extrusion hole for the base as a center.

If the curing agent is a liquid substance which is relatively easily diffusible in the base and the diameter of the extrusion hole 4 for the base is not more than about 3 mm, the practically feasible dispersion of the curing agent in the base can be achieved by using generally 1 to 10, usually 1 to 4, extrusion holes 5 for the curing agent. On the other hand, if the diameter of the extusion hole 4 for the base is larger than about 3 mm, and/or the diffusibility of the curing agent in the base is relatively low, or when the curing agent is required to be highly dispersible in the base, it is recommended to provide a number of extrusion holes 5 for the curing agent.

Figures 2 and 3 show one example of the latter embodiment. Figure 2 is a front sectional view of the vicinity of the opening 6 of the extruding portion 1, and Figure 3, a top plan view thereof. The front end of the conduit 3 for the curing agent is formed in a double ring shape within the extrusion hole 4 for the base, and 33 extrusion holes 5 are provided in that part.

As the shapes of the openings of the extrusion holes 4 and 5 for the base and the curing agent become more complex, the area of contact between the two liquids becomes larger and the diffusibility of the curing agent in the base becomes greater. The effect intended by the present invention, however, can be producd even if they are of a circular shape which can be easily machined. The area of the opening is adjusted to a size which is sufficient for maintaining the speeds of pumping of the base and the curing agent. If they are pumped by a pump having meterability, it is not necessary to consider the opening area strictly, and its size may be properly determined by considering the entire designing of the opening 6 and the method of machining.

Figures 4 to 9 illustrate another embodiment of the applicator used in the method of this invention, in which two foraminous plates in the superimposed state are provided in the opening 6 of the extruding portion 1 and a plurality of extrusion holes for the base and a plurality of extrusion holes for the curing agent are provided. When the distribution of the concentration of the curing agent in the base extruded does not require microscopic uniformity, it is recommended to fit two types of foraminous plates 8 and 9 as shown in Figures 4 to 9 in the opening 6 in order to arrange 3 to 6 extrusion holes for each of the base and the curing agent.

Figures 4 and 7 are front sectional views showing the extruding portion of the applicator in which a first foraminous plate 8 and a second foraminous plate 9 are superimposed and fitted in the opening of the applicator. Figures 5 and 8 are top plan views of the foraminous plate 8, and Figures 6 and 9 are top plan views of the foraminous plate 9.

With reference to the embodiment hsown in Figures 4 to 9, the first foraminous plate 8 and the second foraminous plate 9 are each composed of a smooth circular plate. As shown in Figure 5, the first foraminous plate 8 has provided a plurality of (five in the drawing) through-holes 10 which become passages for the base provided at its central and peripheral portions. It also has an annular groove 11a leading to holes 11 in Figure 6. The through-holes 10 communicate with the conduit 2 for the base through a valve 7, and the annular groove 11a, with the conduit 3 for the curing agent by means of a groove 11b.

The second foraminous plate 9 has a plurality of (five in the drawing) through-holes 10a as extrusion holes for the base provided at positions corresponding to the holes 10, and a plurality of (four in the drawing) of through-holes 11 as extrusion holes for the curing agent, as shown in Figure 6. The upper ends of the through-holes 11 exist at positions corresponding to the annular groove 11a of the first foraminous plate 8.

As shown in Figure 4, these foraminous plates 8 and 9 are superimposed so that the through-holes 10 are in alignment with the through-holes 10a; and in this state, set in the opening 6 of the extruding portion 1. When the method of this invention is practiced by using a device equipped with a nozzle of such a structure, the base is introduced from the conduit 2 into the through-holes 10 and 10a, and the curing agent is fed from the conduit 3 provided in the side surface of the extruding portion 1 into the through-holes via the groove 11b and the annular groove 11a. Thus, they are co-extruded and associated at the opening 6. Ideally, the extruded flows of the base and the curing agent are then associated to form one strand. In order to achieve this, it is desirable to adjust the sizes and the relative positions of the extrusion holes for the base marked $x_1$, .....$x_5$ in Figure 6 and the extrusion holes for the curing agent marked $y_1$ .....$y_4$ in Figure 6 so that they are within the ranges specified below.

$$3r(x) < d(x) < 8r(x) + r(y)$$

wherein

r(x) is the radius of each of the extrusion holes $x_1 \ldots x_5$,

r(y) is the radius of each of the extrusion holes $y_1 \ldots y_4$, and

d(x) is the distance between the centers of adjoining extrusion holes x.

Generally, it is preferred that $r(x) > r(y)$.

The base and the curing agent which have been co-extruded as above desirably form a single strand, but this is not essential. Alternatively, an extrusion hole for the base and an extrusion hole for the curing agent may be arranged in pair so that at least one extruded flow of the base and at least one extruded flow of the curing agent are associated immediately after co-extrusion. In this case, only the relative positions of the extrusion hole for the base and the extrusion hole for the curing agent become a problem. The relative positions of the extrusion holes for the base and the relative positions of the extrusion holes for the curing agent are not so important and may be suitably set according to the designing of the foraminous plates. Assuming that in Figure 6, the extrusion hole $x_1$ for the base and the extrusion opening $y_1$ constitute a pair, $x_1$ and $y_1$ should desirably be in the relative positions represented by the following expression.

$$d(x_1 \ y_1) < s(x_1) + r(y_1)$$

wherein

$s(x_1)$ is the radius of the strand of the base extruded from $x_1$,

$d(x_1 y_1)$ is the distance between the centers of $x_1$ and $y_1$, and

$r(y_1)$ is as defined above.

Desirably, the central point of y is located inwardly of a line connecting the centers of adjoining extrusion holes x positioned outermost in the foraminous plate. But with some types of the base, the curing agent or a substrate, the extrusion holes $y_1 \ldots y_4$ for the curing agent may be located radially outwardly of the extrusion holes $x_1 \ldots x_4$ for the base so long as the relative positions specified above are satisfied.

The embodiment shown in Figures 7 to 9 are one modification of the foraminous plates shown in Figures 4 to 6, and is advantageously employed when the amount of the curing agent extruded is larger than that of the base. The foraminous plates in this modification perform the same function as the foraminous plates of Figures 4 to 6. Those parts which correspond to Figures 4 to 6 are represented by the same reference numerals. The embodiment of Figures 7 to 9 are the same as that in Figures 4 to 6 except that the through-holes 10 and 10a for the base have larger diameters than those in Figures 4 to 6 and the through holes for the curing agent have smaller diameters than those in Figures 4 and 6. In the embodiment shown in Figures 7 to 9, too, it is desirable that an extruded flow of the base and an extruded flow of the curing agent should be associated to form a single strand. The sizes of the individual extrusion holes and their relative positions for this purpose can be determined in accordance with the same way as in Figures 4 to 6.

Figures 11 to 15 illustrate still another embodiment of the extruding portion of the applicator. Figure 11 is a front sectional view of the extruding portion of the applicator in which four foraminous plates 31, 32, 33 and 34 are superimposed and fitted in the opening of the applicator. Figures 12, 13, 14 and 15 are top plan views illustrating the foraminous plates 31, 32, 33 and 34, respectively.

As shown in Figure 12, the foraminous plate 31 has a passage 35 for the base at its central portion, an annular groove 36 externally of the passage 35 and a flow passage 37 leading from the groove 36 to the peripheral portion of the foraminous plate 31.

The foraminous plate 32 has five passages 38 for the base and four passages 39 for the curing agent and also includes four grooves 40 formed on the exit side surface of the foraminous plate and constituting passages for the curing agent from the aforesaid passages 39 to the central portion of the foraminous plate 32.

The foraminous plate 33 includes passages 41 for the base which are in alignment with the five passages 38 of the foraminous plate 32 and flow passages 42 for the curing agent which are in alignment with the inside end portions of the four grooves of the foraminous plate 32.

The foraminous plate 34 is a mere pressing plate for the foraminous plate 33.

The four foraminous plates are superimposed as shown in Figure 11 and mounted in the extruding portion 1. When the method of this invention is practiced by using a device equipped with a nozzle of such a structure, the base is introduced into the through-holes 35 and 38 from the conduit 2, and the curing agent is introduced into the annular groove 36, the through-holes 39 and the grooves 40 from the conduit 3. In the opening of the applicator, the base and the curing agent are co-extruded from the through holes 41a and 42 respectively and associated.

According to the method of this invention which is practiced by using the aforesaid applicators, the base and the curing agent do not cause blocking of the extrusion holes by curing since there is no obstacle in their path after they have contacted each other. Should there be a fear of blockage, the applicator can be easily cleaned because the foraminous plates can be mounted and detached easily. For the pumping of the curing agent, a metering pump such as a plunger-type metering pump or an oval-gear metering pump can be used. Since the base of the hot-melt adhesive usually has a high viscosity even at a high temperature, it is desirable to adjust the liquid pumping pressure of the base to 20 to 100 $kg/cm^2$ and the liquid pumping pressure of the curing agent to 5 to 20 $kg/cm^2$ in order to secure the accuracy of the mixing ratio. If the mixing ratio of the curing agent to the base is high, it is desirable to pre-heat the curing agent and thus remove the temperature difference between the two liquids.

To facilitate an understanding of the present invention, a flow chart of the entire process is shown in Figure 10. In this chart, the reference numeral 1 represents the main unit of the extrusion portion; 3, a conduit for the curing agent; 8 and 9, foraminous plates, 21, a feed tank for the base; 22, a feed pipe for the base; 23, a feed tank for the curing agent; 24, a metering pump for the curing agent; 25, a feed pipe for the curing agent; and 26, a valve for feeding the curing agent.

As required, a return pipe 27 for the curing agent may additionally be provided in the process shown in Figure 10. By providing this return pipe 27, the base and the curing agent can be co-extruded intermittently well and stably by keeping the metering pump 24 in action and synchronously opening and closing the valve 7 in the main unit 1 of the extruding portion and the supply valve 26. This operating method is especially effective when the properties and the operating conditions of the base and the curing agent (particularly their viscosities, temperatures and extrusion speeds) are quite different.

When the base and the curing agent are co-extruded in accordance with the present invention, the state of mixing and dispersion of the two can be ascertained in the following manner. For example, in the embodiment shown in Figures 4 to 6, the base (20,000 cps, 180°C) is fed at a rate of 120 g/min. to the through-holes 10 and 10a through the conduit 2, and instead of the curing agent, a mineral oil dyed red (viscosity 0.5 cps, 180°C) is fed into the through-holes 11 through the conduit 3 at a rate of 1 g/min. They are co-extruded, and the resulting strand is collapsed by holding it with wood pieces having releasing paper bonded thereto before the strand is cooled and solidified. After cooling, the release paper is removed, and the state of coloring of the strand deformed into a sheet form is observed. It is found that almost entire surface of the strand becomes red, and the mineral oil is nearly uniformly diffused in the base.

The method of this invention can be applied to a plurality of liquid substances which rapidly react and cure upon contact with each other, and can be especially advantageously applied to hot-melt adhesives. The base and curing agent of a hot-melt adhesive that can be advantageously used in the method of this invention will be described.

The base used in this invention may, for example, be a hot-melt polymer containing at least one functional group selected from the class consisting of a hydroxyl group, a carboxyl group, a metal salt or anhydride of the carboxyl group, an epoxy group, and an amino group, and a hot-melt composition containing as a main component a silane-modified polymer such as a silane-modified polyolefin polymer. The curing agent may, for example, be a curing agent containing at least two functional groups capable of reacting with the functional group of the base and curing it, or a reaction catalyst capable of promoting the crosslinking reaction between the functional groups of the base. Since the method of this invention is especially useful when applied to a combination of a hot-melt composition containing a silane-modified polymer as a main component and a silanol condensation catalyst, this combination will further be described.

The use of the silane-modified polymer such as a silane-modified polyolefin as a hot-melt adhesive has already been known from Japanese Laid-Open Patent Publications Nos. 149741/1979, 40721/1980, 160074/1980 and 165973/1980.

- 14 -

Usually, a hot-melt adhesive based on the silane-modified polyolefin is composed of the silane-modified polyolefin, a silanol condensation catalyst for promoting the curing reaction of the polymer and auxiliary components such as a tackifier or a wax. Such a hot-melt composition containing the silanol condensation catalyst has good heat resistance, but in the presence of water, the condensation reaction takes place to cure the polymer. This presents the handling difficulty that the composition should be produced, and stored, in a dry atmosphere. Furthermore, when the polymer and the catalyst are separately stored and in use, fed to an applicator and mixed before extrusion, the polymer cures rapidly by the heat of the heated applicator and its extrusion becomes impossible. Accordingly, the continuous or intermittent application of a hot-melt composition based on such a silane-modified polyolefin polymer to a substrate has not gained commercial acceptance. According to this invention, however, this hot-melt composition can be coated on a substrate and then cured without any trouble by feeding the base and the curing agent separately into an applicator, coextruding them and almost simultaneously with the extrusion, associating the flows of these components.

Some examples of the silane-modified polymer which can be used as the base in the present invention are described below.

(1) Polymers obtained by grafting silane compounds of the general formula $RSiY_3$ wherein R represents an organic group having an olefinic double bond such as a vinyl or allyl group and Y represents a hydrolyzable organic group such as an alkoxy group to polyolefin polymers.

The polyolefin polymers include homopolymers of olefins, copolymers of olefins with each other, and copolymers of olefins with other ethylenically unsaturated monomers. Specific exmples are polyethylene, polypropylene, ethylene-propylene copolymer, ethylene-vinyl acetate copolymer and ethylene-(meth)acrylate copolymers. The ethylene-vinyl acetate copolymers and ethylene-(meth)-acrylate copolymers are preferred. These polymers can have a melt index (determined by ASTM D-1238) of generally 0.1 to 3,000, preferably 3 to 1,000.

Vinyltrialkoxysilanes are typical examples of the silane compounds used to modify these polymers. Vinyltrimethoxysilane and vinyltriethoxysilane are preferred.

Grafting of the silane compounds to the polyolefin polymers can be effected, for example, by heat-kneading both in the presence of free radical generators as shown by the method described in Japanese Patent Publication No. 26696/1982.

(2) Copolymers of ethylene with the aforesaid silane compounds or terpolymers of ethylene, other ethylenically unsaturated compounds and the aforesaid silane compounds.

Examples of the ethylenically unsaturated compounds which can be used to prepare the aforesaid copolymers include vinyl esters, unsaturated carboxylic acid esters, unsaturated nitriles, unsaturated acid amides and vinyl ethers. Vinyl acetate and (meth)acrylates are preferred.

There is no particular restriction on the method of producing the aforesaid copolymers or terpolymers. It is most economically advantageous however to produce them by the high-pressure bulk polymerization method. These silane-modified copolymers and terpolymers are described in the specifications of Japanese Laid-Open Patent Publications Nos. 150594/1976 and 8447/1981.

(3) Silane-modified tackifier resins obtained by grafting the aforesaid silane compounds to tackifying resins.

Examples of the tackifier resins include natural resins such as rosin-type resins, terpene-type resins and coumarone-indene resin, and synthetic resins such as styrene-type resins and petroleum resins.

The silane-modified tackifier resins can be synthesized, for example, by heat-kneading the tackifier resins and the silane compounds in the presence of free radical generators as in the method described in Japanese Laid-Open Patent Publication No. 73716/1980.

(4) Silane-modified waxes obtained by grafting the aforesaid silane compounds to waxes.

Examples of the waxes include paraffin wax, microcrystalline wax, polyethylene wax, atactic polypropylene, low-molecular-weight ethylene-vinyl acetate copolymer, and low-molecular-weight ethylene-(meth)acrylate copolymers.

The silane-modified waxes can be synthesized, for example, by heat-kneading the waxes and compounds in the presence of free radical generators. The silane-modified waxes are disclosed, for example, in Japanese Laid-Open Patent Publication No. 145785/197 and for details, reference may be made to this literature reference.

The silane-modified polymers described above are generally solid at room temperature. The degee of modification with the silane compounds is not strictly limited, but generally, degrees of modification in the range of 0.5 to 5% are suitable.

As required, tackifier resins, waxes, plasticizers, fillers, stabilizers, etc. may be incorporated in the aforesaid silane-modified polymers. Tackifier resins which can be incorporated include, for example, rosin esters, polyterpenes and aliphatic, alicyclic and aromatic petroleum resins. Those which contain functional groups (e.g., a carboxyl group) which promote the hydrolysis or condensation of alkoxysilanes, for examplle rosins, are not desirable. The use of tackifier petroleum resins containing no functional group are especially preferred. Waxes that can be incorporated may include paraffin wax, microcrystalline wax and synthetic waxes.

The silanol condensation catalyst to be co-extruded with the silane-modified polymers described above may be those known heretofore if they are liquid in use. For example, dibutyltin dilaurate, dibutyltin diacetate and dibutyltin dioctoate can be used. Dibutyltin dilaurate is preferred.

The amount of the silanol condensation catalyst to be co-extruded is preferably 0.03 to 3% by weight, especially preferably 0.05 to 2% by weight, based on the silane-modified polymer. If this amount is too small, it is difficult to extrude it stably into the silane-modified polymer, and to obtain a uniform crosslinked co-extrudate. On the other hand, when the amount of the catalyst is too large, the catalyst layer spreads on the interface between the substrate and the applied adhesive to worsen wetting between the adhesive and the substrate. Consequently, a stable heat-resistant adhesion strength is difficult to obtain.

The presence of some water is necessary in order to condense and crosslink the silane-modified polymer. However, when the hot-melt adhesive is to be applied to a substrate which is porous and contains moisture, such as paper and wood, there is no need to add water, but water is supplied from the substrate or from the atmosphere. On standing for several days, the silane-modified polymer applied undergoes hydrolysis and condensed and crosslinked. On the other hand, when a substrate containing no moisture and being impermeable to water, such as metal, is used, it is convenient to disperse 1 to 2% of water in the curing agent (catalyst) using an ordinary surface-active agent.

The following examples illustrate the present invention more specifically. All parts and percentages in these examples are by weight.

## EXAMPLE 1

Sixty parts of a terpolymer of ethylene, vinyl acetate and vinyl alcohol obtained by saponifying to an extent of 20% the vinyl acetate unit of an ethylene/vinyl acetate copolymer (EVA) having a melt index of 150 g/10 min. and a vinyl acetate content of 28% by weight, 40 parts of a glycerol ester of hydrogenated rosin and 0.5 part of Irganox 1010 (a trade name for a product of Ciba-Geigy) were melt-kneaded fully, and the mixture was fed as a base into the base feeding tank 21 shown in Figure 10. In the meantime, 9.3 parts of xylylene diiisocyanate was fed as a curing agent into the curing agent feeding tank 23 of Figure 10. Then, the base kept at 160°C was sent to extruding portion 1 through the conduit 2 at a rate of 150 g/min. Simultaneously, the curing agent was introduced into the conduit 3 at a rate of 1.4 g/min. Both were co-extruded from the base extrusion hole 4 and the curing gent extrusion hole 5 and associated.

In this example, foraminous plates of the type shown in Figures 4 to 6 were mounted on the opening of the applicator. The sizes of the foraminous plates were as follows:-

$$r(x) = 0.35 \text{ mm}$$
$$r(y) = 0.25 \text{ mm}$$
$$d(x) = 1.65 \text{ mm}$$
$$d(x,y) = 0.825 \text{ mm}$$

The hot-melt adhesive composition co-extruded and associated into a single strand is then applied to a wooden piece, 20 mm wide, placed 1 cm immediately below the opening 6 of the applicator. Another wooden piece of the same size was superimposed on the coated surface with its both ends shifted to one side. The assembly was bonded under pressure to form an adhesion test sample. The test sample was put in a hot oven. The upper end of one of the wooden piece was suspended from the ceiling of the oven and fixed, and a load of 500 g was suspended from the lower end of the other wooden piece. The temperature of the oven was raised at a rate of 5°C/20 minutes. When the temperature of the oven was raised to 120°C, the bonded portion did not undergo fracture. The sample was therefore found to have excellent heat-resistant adhesiveness.

The aforesaid co-extrusion was effected repeatedly, but blocking of the extrusion holes or other troubles did not occur.

COMPARATIVE EXAMPLE 1

The same melt-kneaded composition composed of 60 parts of ethylene-vinyl acetate-vinyl alcohol terpolymer, 40 parts of a glycerol ester of hydrogenated rosin and 0.5 part of Irganox 1010 as used in Example 1 was fed into the base feeding tank 21 of Figure 10 and fully melted. Then, 9.3 parts of xylylene diisocyanate was added to it and they were fully mixed with stirring. As a result, the mixture increased in consistency with time and after a lapse of 10 to 15 minutes, completely cured. Its extrusion was no longer possible.

EXAMPLE 2

A mixed solution of 2 parts of vinyltrimethoxysilane and 0.2 part of t-butyl peroctoate was sprinkled over 100 parts of pellets of EVA having a melt index of 150 g/10 min. and a vinyl acetate content of 28% and dispersed. Then, the pellets were fed into an extruder having a screw diameter of 30 mm, and kneaded at a temperature of 170 to 180°C to perform grafting reaction and obtain a silane-grafted EVA polymer.

Sixty parts of the silane-grafted EVA polymer, 30 parts of hydrogenated petroleum resin (ARKON P-100, a trade name for a product of Arakawa Chemical Co., Ltd.), 10 parts of paraffin wasx (Paraffin Wax 145F, a product of Nihon Seiro K. K.) and 0.5 part of Irganox 1010 were fully melt-mixed at a temperature of 140 to 150°C. The mixture was fed into the feeding tank 21 of Figure 10. In the meantime, dibutyltin dilaurate was fed into the feeding tank 23 of Figure 10. Then, the silane-modified hot melt mixture heated at 180°C and dibutyltin dilaurate were introduced into conduits 2 and 3 at a rate of 200 g/min. and 2 g/min. respectively and co-extruded from extrusion holes 4 and 5 at the opening of the applicator and associated into a single strand.

In this example, foraminous plates of the type shown in Figures 7 to 9 were mounted in the opening portion of the applicator. The sizes of the foraminous plates were as follows:-

r(x)=0.45 mm

r(y)=0.1 mm

d(x)=1.4 mm

d(x,y)=0.8 mm

The strand was coated on a wooden piece, 20 mm wide, placed 1 cm immediately below the opening of the applicator. Another wooden piece of the same size was applied to it with its both ends shifted to one side. The assembly was bonded under pressure to prepare an adhesion test sample. The adhesion test sample was left to stand indoors for 3 days.

The sample was then put in a hot oven. The upper end of one of the wooden pieces was suspended from the ceiling of the oven and fixed, and a load of 400 g was suspended from the lower end of the other wooden piece. The temperature of the oven was raised at a rate of $5^{\circ}$C/ 15 minutes. When the temperature of the oven was raised to $110^{\circ}$C, the bonded portion did not undergo fracture, and the sample was found to have excellent heat-resistant adhesiveness.

The above co-extrusion was repeated, but no trouble occurred.

### COMPARATIVE EXAMPLE 2

In Example 2, an adhesion test sample was prepared by extruding only the silane-modified hot-melt mixture. The sample was subjected to the same heat-resistance adhesion test as in Example 2. The bonded portion fractured when the temperature of the oven rose to 65°C.

EXAMPLE 3

Two parts of γ-methacryloxypropyltrimethoxysilane and 0.3 part of 2,5-dimethyl-2,5-bis(t-butylperoxy)hexyne-3 were mixed with 100 parts of pellets of an ethylene-ethyl acrylate (EEA) copolymer having a melt index of 220 g/10 min. and an ethyl acrylate content of 28%. The mixture was fed into an extruder having a screw diameter of 30 mm, and extruded at a temperature of 200°C to form a silane-grafted EEA copolymer.

Sixty parts of the silane-grafted EEA copolymer, 30 parts of hydrogenated alicyclic petroleum resin (ESCOREZ 5300, a trade name for a product of Exxon Chemical Co., ltd.), 10 pars of paraffin wax (145°F), 0.5 part of Irganox 1010 were fully melt-mixed at 140 to 150°C to form a hot-melt mixture. The mixture was fed into the feeding tank 21 of Figure 10, and in the meantime, dibutyltin dilaurate was fed into the feeding tank 23 of Figure 10. The hot-melt mixture heated at 180°C and dibutyltin dilaurate were introduced into the conduits 2 and 3 at a rate of 200 g/min. and 2 g/min., respectively, co-extruded from the extrusion holes 8 and 9 of the applicator, and associated into a single strand.

In this example, foraminous plates of the type shown in Figures 11 to 15 were mounted in the opening portion of the applicator. The sizes of the foraminous plate 33 were as follows:-

$r(x)=0.45$ mm
$r(y)=0.1$ mm
$d(x)=1.4$ mm
$d(x,y)=0.8$ mm

An adhesion test sample was prepared in the same way as in Example 2, and its heat-resistant adhesiveness was evaluated in the same manner as in Example 2. When the temperature of the oven was raised to $110^{\circ}C$, the bonded portion did not undergo fracture, and the sample was found to have excellent heat-resistant adhesiveness.

Even when the co-extrusion was repeated, no blockage of the extrusion holes occurred, and the extrusion could be performed intermittently over an extended period of time.

What is claimed is:

1. A method of applying a multiple-package reactive and curable liquid substance, which comprises applying a plurality of liquid substances together to a substrate, wherein the plurality of liquid substances are fed separately into a plurality of extrusion holes and extruded, and are associated almost simultaneously with the extrusion.

2. The method of claim 1 wherein one liquid substance is extruded into an extruded flow of another liquid substance immediately before, simultaneously with or immediately after the extrusion of the other liquid substance.

3. The method of claim 1 wherein a plurality of extrusion holes for one liquid substance and a plurality of extrusion holes for another liquid substance are provided, and by properly adjusting the relative positions of these sets of extrusion holes, extruded flows of said one liquid substance and extruded flows of said other liquid substance are associated into a single strand after they have been co-extruded.

4. The method of claim 1 wherein the multi-package reactive and curable liquid substance is a hot-melt adhesive composition.

5. The method of claim 1 wherein the plurality of liquid substances consist of a hot-melt base having a silane-modified polymer as a main component and a curing agent composed of a silanol condensation catalyst.

6. An applicator having a plurality of extrusion holes for the practice of the method of claim 1.

FIG. 1

FIG. 2

FIG. 3

0131883

# FIG. 4

# FIG. 5

# FIG. 6

# FIG. IO

0131883

# FIG. 7

# FIG. 8

# FIG. 9

# FIG. 16

FIG. 11

FIG. 12

FIG. 13

FIG. 14

FIG. 15